# EUROPÄISCHE PATENTSCHRIFT

(11) **EP 3 238 950 B1**
(45) Veröffentlichungstag und Bekanntmachung des Hinweises auf die Patenterteilung: **08.07.2020**
(21) Anmeldenummer: 17168258.6
(22) Anmeldetag: 26.04.2017
(51) Int. Cl.: B60B 1/00, B60B 1/04, B60B 27/02

(54) **NABE UND LAUFRAD**
HUB AND WHEEL
MOYEU ET ROUE

(30) Priorität: 26.04.2016 DE 102016107752
(43) Veröffentlichungstag der Anmeldung: 01.11.2017
(73) Patentinhaber: DT Swiss AG, 2504 Biel (CH)
(72) Erfinder: Spahr, Stefan, CH-2543 Lengnau (CH); Haas, Simon, CH-4532 Feldbrunnen (CH)
(74) Vertreter: BSB Patentanwälte Schütte & Engelen Partnerschaft mbB

(56) Entgegenhaltungen:
- EP-A1- 1 939 013
- EP-A2- 0 786 360
- US-A1- 2007 284 934

## Beschreibung

Die vorliegende Erfindung betrifft eine Nabe und ein Laufrad für ein wenigstens teilweise muskelbetriebenes Zweirad und insbesondere für ein Fahrrad entsprechend dem Oberbegriff des Anspruchs 1 und wie es aus Dokument US 2007/284934 A1 bekannt ist.

Im sportlichen Bereich sowie auch im Wettkampfbereich werden meist besonders leichte und zugleich sehr belastbare Fahrradkomponenten gefordert. So sind beispielsweise Laufräder mit geraden bzw. nicht gekröpften Speichen bekannt geworden, welche ein geringes Gewicht und zugleich eine hohe Stabilität bieten. Für solche Laufräder werden Naben benötigt, die einen zur Aufnahme von geraden bzw. nicht gekröpften Speichen geeigneten Nabenflansch aufweisen.

Im Stand der Technik sind dazu Naben bekannt geworden, bei denen der Nabenflansch eine Vielzahl an tangentialen bzw. radialen Bohrungen aufweist. Durch diese werden die Speichen eingeführt und im montierten Zustand gehalten. Damit für jede Speiche eine stabile Aufnahmemöglichkeit gewährleistet werden kann und damit auch sich kreuzende Speichen möglich sind, muss der Flansch in der Regel entsprechend breit ausgeführt werden. Dadurch ergibt sich für solche Naben ein sehr ungünstiges Gewicht.

Ein weiterer Nachteil der bekannten Naben ist, dass der Nabenflansch oft einen sehr großen Durchmesser aufweist, da die geraden Speichen beim Einspeichen entsprechend Platz benötigen. Besonders problematisch ist das Einspeichen beispielsweise bei Naben mit einem Rotor oder mit einer Aufnahme für Bremsscheiben. An diesen Positionen sind die Nabenflansche daher mit einem oft sehr großen Durchmesser ausgeführt, was sich nachteilig auf das Gewicht der Nabe auswirkt. Zudem bieten große bzw. breite Nabenflansche eine große Windangriffsfläche und weisen daher oft eine ungünstige Aerodynamik auf.

Im Stand der Technik sind daher Naben bekannt geworden, welche gerade Speichen aufnehmen können und zugleich einen kompakt ausgestalteten Nabenflansch aufweisen. Damit ein unkompliziertes Einspeichen möglich ist, sind am Nabenflansch in der Regel großflächige Ausnehmungen oder zahlreiche Schlitzungen vorgesehen. Das führt allerdings oft zu einer erheblichen konstruktiven Schwächung des Nabenflansches.

Es ist daher die Aufgabe der vorliegenden Erfindung, eine Nabe und ein Laufrad zur Verfügung zu stellen, welche eine stabile und zugleich kompakte Aufnahmemöglichkeit für die Speichen im Nabenflansch bieten.

Diese Aufgabe wird gelöst durch eine Nabe mit den Merkmalen des Anspruchs 1 und durch ein Laufrad mit den Merkmalen des Anspruchs 15. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Nabe verfügt über ein Nabengehäuse. Das Nabengehäuse ist zur drehbaren Anordnung gegenüber wenigstens einer im Nabengehäuse aufnehmbaren oder aufgenommenen Achse geeignet und ausgebildet. An dem Nabengehäuse ist wenigstens ein umlaufender Nabenflansch vorgesehen. Der Nabenflansch dient zur Aufnahme und definierten Orientierung einer Mehrzahl an Speichen. Die Speichen weisen insbesondere jeweils einen Speichenkörper und einen Speichenkopf auf. Der Speichenkopf ist insbesondere abgeflacht. Der Nabenflansch umfasst eine Mehrzahl von Aufnahmeabschnitten zur Aufnahme jeweils eines Speichenkopfes. Den Aufnahmeabschnitten ist jeweils eine Speichendurchführung zugeordnet. Durch die Speichendurchführung ist eine aufgenommene Speiche aus dem Aufnahmeabschnitt herausführbar. Dabei weist der Nabenflansch wenigstens zwei unterschiedliche Typen von Aufnahmeabschnitten auf. Ein erster Typ umfasst eine umfänglich geschlossene Speichendurchführung. Ein zweiter Typ umfasst eine umfänglich geöffnete Speichendurchführung.

Die erfindungsgemäße Nabe hat viele Vorteile. Ein erheblicher Vorteil ist, dass durch die unterschiedlichen Aufnahmeabschnitte eine hohe Stabilität bei einer kompakten Bauweise des Nabenflansches erreicht wird. Durch die unterschiedliche Ausgestaltung von Aufnahmeabschnitten wird eine durchgehende bzw. einseitige Schwächung des Nabenflansches vermieden. So kann ein Einfluss des einen Typs auf die Stabilität des Nabenflansches durch den anderen Typ kompensiert werden und umgekehrt. Dadurch ergibt sich ein besonders steifer Nabenflansch, welcher auch hohen Kräften standhält.

Zudem kann der Nabenflansch mit einem entsprechend geringen Durchmesser ausgestaltet werden, ohne dass ein umständliches Einführen der Speichen notwendig ist. So ist beispielsweise in die umfänglich geöffneten Speichendurchführungen eine Speiche auch quer zu ihrer Längsrichtung einlegbar. Des Weiteren kann der Nabenflansch daher auch besonders schmal ausgestaltet werden. Die Speichen können axial besonders weit außen angeordnet werden. Zwischen den beiden Speichen liegt insbesondere auch kein Material, sodass sich die Speichen beispielsweise auch berühren können und vorzugsweise berühren. Beide Maßnahmen tragen dazu bei, dass die axial inneren Speichen nicht so steil an dem Laufrad montiert werden müssen wie es bei anderen Konstruktionen der Fall ist. Außerdem ergibt sich insgesamt eine sehr hohe axiale Laufradsteifigkeit bei einem besonders geringen Gewicht. Zudem ermöglicht die erfindungsgemäße Nabe eine besonders geringe radiale Ausdehnung des Nabenflansches, sodass Nabenflansche mit sehr kleinen Durchmessern verwirklicht werden können, wodurch das Gewicht der Nabe noch weiter reduziert werden kann

Vorzugsweise sind die Aufnahmeabschnitte nur an einer axialen Seite des Nabenflansches und insbesondere an einer axialen Außenseite angeordnet. Möglich ist auch, dass die Aufnahmeabschnitte an beiden axialen Seiten des Nabenflansches angeordnet sind. Eine Anordnung an der axialen Außenseite ermöglicht ein besonders einfaches Einlegen bzw. Einführen der Speichen. Die Außenseite ist dabei insbesondere die Seite, welche zu einem axialen Ende der Nabe hin ausgerichtet ist. Bevorzugt ist auch, dass die Aufnahmeabschnitte beider Typen umlaufend und insbesondere gleichmäßig verteilt umlaufend über den Nabenflansch angeordnet sind.

Die unterschiedlichen Typen von Aufnahmeabschnitten sind vorzugsweise gegenüber einer Umfangslinie des Nabenflansches mit wenigstens einem Versatz angeordnet. Insbesondere sind gleiche Typen von Aufnahmeabschnitten entlang einer gemeinsamen Umfangslinie angeordnet. Der Versatz ist insbesondere nur zwischen unterschiedlichen Typen von Aufnahmeabschnitten vorgesehen. Beispielsweise sind Aufnahmeabschnitte des zweiten Typs gegenüber der Umfangslinie axial weiter innen als die Aufnahmeabschnitte des ersten Typs angeordnet. Eine umgekehrte Anordnung ist möglich.

Dazu können beispielsweise Aufnahmeräume, in denen die entsprechenden Aufnahmeabschnitte vorgesehen sind, in axialer Richtung tiefer bzw. flacher ausgestaltet sein, sodass sich ein Versatz ergibt. Insbesondere sind auch die in den Aufnahmeabschnitten aufgenommenen Speichen mit dem Versatz gegenüber der Umfangslinie angeordnet. Insbesondere ist der Versatz auch für die Speichendurchführungen der jeweiligen Aufnahmeabschnitte vorgesehen. Ein solcher Versatz bietet beispielsweise den Vorteil, dass trotz einer entsprechend schmalen Flanschbreite eine Kreuzung der aufgenommenen Speichen möglich ist. Besonders bevorzugt ist der Versatz so ausgestaltet, dass sich die aufgenommenen Speichen im Kreuzungspunkt berühren.

Besonders bevorzugt ist der Versatz dazu geeignet und ausgebildet, wenigstens eine im zweiten Typ Aufnahmeabschnitt aufgenommene Speiche durch wenigstens eine in ersten Typ Aufnahmeabschnitt aufgenommene Speiche an einem Verlassen der geöffneten Speichendurchführung in axialer Richtung formschlüssig zu blockieren. Ein solcher Versatz hat den Vorteil, dass ein unerwünschtes Ausspeichen der in den umfänglich offenen Speichendurchführungen aufgenommenen Speichen zuverlässig vermieden wird.

Insbesondere sind die unterschiedlichen Typen von Aufnahmeabschnitten abwechselnd über den Nabenflansch angeordnet. Insbesondere folgt auf jeden ersten Typ Aufnahmeabschnitt ein zweiter Typ Aufnahmeabschnitt. Durch die abwechselnde Anordnung der verschiedenen Typen kann der Einfluss des einen Typs auf die Stabilität des Nabenflansches besonders gut und gleichmäßig durch den jeweils anderen Typ kompensiert werden. Möglich ist auch, dass auf einen oder mehrere Aufnahmeabschnitte des ersten Typs ein oder mehrere Aufnahmeabschnitte des zweiten Typs folgen. Dabei wiederholt sich diese Abfolge insbesondere gleichmäßig über den Umfang des Nabenflansches.

Die Speichendurchführungen sind insbesondere dazu geeignet und ausgebildet, einer aufgenommenen Speiche wenigstens näherungsweise eine definierte Längsausrichtung vorzugeben. Dazu weisen die Speichendurchführungen vorzugsweise eine in einem bestimmten Winkel im Nabenflansch ausgerichtete Längsachse auf. Die Längsachsen der Speichendurchführungen können beispielsweise radial und/oder tangential ausgebildet sein.

Besonders bevorzugt weisen die Speichendurchführungen von wenigstens jeweils zwei benachbart zueinander angeordneten Aufnahmeabschnitten sich kreuzende Längsachsen auf. Die Längsachsen kreuzen sich insbesondere in einer gedachten Verlängerung außerhalb der Speichendurchführungen. Die Längsachsen kreuzen sich insbesondere derart, sodass darin aufgenommene Speichen sich radial weiter außen kreuzen können. Die sich kreuzenden Längsachsen liegen insbesondere in verschiedenen Ebenen, sodass sich die Längsachsen nicht schneiden. Andere benachbarte Speichendurchführungen können so ausgerichtet sein, dass sich die aufgenommenen Speichen nicht kreuzen. Beispielsweise weist eine Speichendurchführung zu einem Nachbarn eine kreuzende Längsachse und zu einem anderen Nachbarn eine sich nicht kreuzende Längsachse auf. Möglich ist, dass die Speichendurchführungen mit kreuzenden Längsachsen durch wenigstens einen Aufnahmeabschnitt voneinander getrennt sind. Möglich ist auch, dass eine Speichendurchführung mit einer dritten oder vierten oder weiter entfernten Speichendurchführung eine kreuzende Längsachse aufweist.

In allen Ausgestaltungen ist es besonders bevorzugt, dass der Nabenflansch an seiner Oberseite wenigstens eine Absenkung umfasst. Die Oberseite ist insbesondere eine radial nach außen ausgerichtete Seite des Nabenflansches. Die Absenkung ist insbesondere als wenigstens ein Rücksprung gegenüber der radialen Umfangslinie des Nabenflansches ausgebildet. Die Absenkung umfasst vorzugsweise wenigstens zwei aufeinander zulaufende Flanken. Die Flanken können einen geraden und/oder einen kurvenförmigen Verlauf aufweisen. Insbesondere treffen sich die Flanken an einem tiefsten Punkt der Absenkung. Durch eine solche Absenkung kann das Gewicht reduziert werden, ohne dass die notwendige Betriebsfestigkeit bzw. Stabilität unvorteilhaft beeinflusst werden.

Insbesondere liegt ein tiefster Punkt der Absenkung radial unterhalb eines Kreuzungspunktes der sich kreuzenden Längsachsen der Speichendurchführungen. Dadurch wird eine Kreuzung der Speichen in einem sehr flachen Winkel ermöglicht. Eine Kreuzung der Speichen in einem flachen Winkel hat den Vorteil, dass eine gute Krafteinleitung über Speichen erreicht wird. Es ist möglich, dass der Kreuzungspunkt innerhalb der Umfangslinie des Nabenflansches liegt. Der Kreuzungspunkt kann auch außerhalb der Umfangslinie des Nabenflansches liegen. Möglich ist, dass der Abstand des Kreuzungspunktes zur äußeren Umfangslinie des Nabenflansches dem Querschnitt der Speiche oder dem doppelten Querschnitt oder einem Vielfachen des Querschnitts der Speiche entspricht.

Der tiefste Punkt der Absenkung ist vorzugsweise mittig zwischen zwei Aufnahmeabschnitten angeordnet. Möglich ist auch, dass der tiefste Punkt der Absenkung mittig zwischen zwei Aufnahmeräumen angeordnet ist. Es ist möglich, dass der tiefste Punkt der Absenkung radial oberhalb einer Vertiefung bzw. Ausnehmung zur Gewichtsreduktion der Nabe liegt. Es ist auch möglich, dass im Nabenflansch wenigstens ein Steg vorgesehen ist und dass der tiefste Punkt der Absenkung radial oberhalb des Steges liegt. Es ist möglich, dass im Nabenflansch mehrere Absenkungen vorgesehen sind, welche symmetrisch über den Umfang verteilt sind. Beispielsweise können sich Absenkungen unterhalb eines Kreuzungspunktes mit Absenkungen oberhalb eines Steges abwechseln.

Es ist möglich dass zwischen benachbarten Aufnahmeabschnitten und insbesondere zwischen Aufnahmeabschnitten, welche Speichendurchführungen mit sich kreuzenden Längsachsen aufweisen, jeweils wenigstens eine Vertiefung im Nabenflansch ausgebildet ist. Die Vertiefung ist insbesondere an einer axialen Seite und besonders bevorzugt an einer axialen Außenseite des Nabenflansches angeordnet. Möglich ist auch, dass die Vertiefung an einer axialen Innenseite vorgesehen ist. Es ist möglich, dass zwischen Aufnahmeabschnitten, welche Speichendurchführungen mit sich nicht kreuzenden Längsachsen aufweisen, keine Vertiefung im Nabenflansch ausgebildet ist. Möglich ist aber auch, dass dort wenigstens eine Vertiefung angeordnet ist.

Solche Vertiefungen bieten eine vorteilhafte Reduktion des Gewichts, ohne dass ungünstige Auswirkungen auf die Stabilität auftreten. Besonders vorteilhaft ist dabei eine Vertiefung zwischen benachbarten Aufnahmeabschnitten mit Speichendurchführungen mit sich kreuzenden Längsachsen, da bei den üblicherweise auftretenden Abmessungen eines Laufrades zwischen diesen Aufnahmeabschnitten ohnehin eine entsprechende Beabstandung vorgesehen ist. Diese Beabstandung eignet sich besonders gut für eine Vertiefung, da hier genügend Material vorhanden ist. Insbesondere wird die Vertiefung so ausgestaltet, dass diese von ausreichend Material für die notwendige Stabilität des Nabenflansches umgeben ist.

Besonders bevorzugt erstrecken sich die Speichendurchführungen der unterschiedlichen Typen von Aufnahmeabschnitten jeweils über die Oberseite und jeweils nur über eine von zwei axialen Seiten des Nabenflansches. Die Speichendurchführungen der unterschiedlichen Typen von Aufnahmeabschnitten können auch an beiden axialen Seiten des Nabenflansches oder ausschließlich an der Oberseite oder einer axialen Seite angeordnet sein. Insbesondere erstrecken sich die Speichendurchführungen des ersten Typs Aufnahmeabschnitt wenigstens abschnittsweise über die Oberseite und die axiale Innenseite des Nabenflansches. Die Speichendurchführungen des zweiten Typs Aufnahmeabschnitt erstrecken sich vorzugsweise wenigstens abschnittsweise über die Oberseite und eine axiale Außenseite des Nabenflansches. Möglich ist auch eine umgekehrte Anordnung. Durch die Ausrichtung der umfänglich geöffneten Speichendurchführung an der axialen Außenseite ist ein besonders unaufwendiges Einspeichen möglich, insbesondere bei einem rotorseitigen bzw. bremsseitigen Nabenflansch.

In allen Ausgestaltungen ist es besonders bevorzugt, dass die umfänglich geöffnete Speichendurchführung als schlitzförmiger Einstich ausgebildet ist. In allen Ausgestaltungen ist es zudem bevorzugt, dass die umfänglich geschlossene Speichendurchführung als Schlitzloch ausgebildet ist. Der Einstich und/oder das Schlitzloch sind insbesondere dazu geeignet und ausgebildet, ein Einlegen und/oder Durchführen eines Speichenkopfes und insbesondere eines abgeflachten Speichenkopfes zu ermöglichen. Der schlitzförmige Einstich und/oder das Schlitzloch weisen insbesondere einen unrunden und vorzugsweise einen ovalen und/oder rechteckigen Querschnitt auf. Es ist möglich, dass der rechteckige Querschnitt abgerundete Ecken aufweist. Derart ausgestaltete Speichendurchführungen können besonders vorteilhaft für Laufräder mit beispielsweise Hammerkopfspeichen eingesetzt werden.

Der schlitzförmige Einstich erstreckt sich vorzugsweise wenigstens teilweise über die Oberseite und diejenige axiale Seite des Nabenflansches, an welcher auch der zugehörige Aufnahmeabschnitt angeordnet ist. Vorzugsweise erstreckt sich der Einstich bei einem axial außenliegenden Aufnahmeabschnitt somit über die axiale Außenseite sowie die Oberseite des Nabenflansches. Insbesondere erstreckt sich der Einstich dann nicht auch über die axiale Innenseite. Dadurch kann die Speiche besonders einfach von axial außen in die Speichendurchführung eingelegt werden. Da an der Innenseite keine Einstiche vorgesehen sind, bleibt der Nabenflansch trotz der Einstiche sehr belastbar. Der Einstich kann aber auch an der axialen Innenseite des Nabenflansches vorgesehen sein.

Insbesondere erstreckt sich der schlitzförmige Einstich nur über einen Teil der Oberseite und insbesondere nicht über die gesamte Oberseite. Das hat den Vorteil, dass trotz des Einstiches ein Wandbereich des Nabenflansches bestehen bleibt, der die Belastungen aufnehmen kann.

Das Schlitzloch erstreckt sich wenigstens teilweise über die Oberseite und diejenige axiale Seite des Nabenflansches, welcher der axialen Seite mit dem zugehörigen Aufnahmeabschnitt gegenüberliegt. Insbesondere erstreckt sich das Schlitzloch wenigstens abschnittsweise über die Oberseite und die axiale Innenseite des Nabenflansches. Insbesondere erstreckt sich das Schlitzloch nicht über die axiale Außenseite. An der axialen Außenseite ist vorzugsweise kein Schlitzloch angeordnet. Dadurch können die Speichen zum einen gut durch das Schlitzloch eingeführt werden und zum anderen muss der Nabenflansch dazu nur sehr lokal eingeschlitzt werden. Das Schlitzloch an der axialen Innenseite ermöglicht ein einfaches und komfortables Einführen der Speichen auch bei sehr kleinen Flanschdurchmessern. Dabei kann die Abschnittslänge des Schlitzloches an der Innenseite in Abhängigkeit des Nabenflanschdurchmessers angepasst werden.

Besonders bevorzugt erstreckt sich das Schlitzloch nur über einen Abschnitt der axialen Innenseite und/oder der Oberseite und insbesondere nicht über die gesamte Innenseite bzw. Oberseite. Dadurch wird gewährleistet, dass trotz des Schlitzlochs genügend Material an der axialen Innenseite sowie an der Oberseite bestehen bleibt, welches zur Stabilität des Nabenflansches beiträgt.

In Verbindung mit dem nur abschnittsweise in der Oberseite eingearbeiteten Einstich ergibt sich somit ein Nabenflansch, welcher insbesondere nie vollständig für die Speichendurchführung durchbrochen ist. Dadurch kann auch bei schmal bzw. niedrig ausgebildeten Nabenflanschen ein sehr hohes Maß an Stabilität und Festigkeit erreicht werden.

Besonders bevorzugt überlappen sich der Einstich und das Schlitzloch abschnittsweise an der Oberseite des Nabenflansches. Insbesondere erstrecken sich der Einstich und das Schlitzloch von der jeweiligen axialen Seite aus wenigstens bis zur Mitte der Oberseite und besonders bevorzugt über die Mitte der Oberseite hinaus. Insbesondere erstrecken sich der Einstich und/oder das Schlitzloch über wenigstens 60% und vorzugsweise wenigstens 70% und besonders bevorzugt über wenigstens 80% oder mehr der Oberseite des Nabenflansches. Dabei gehen der Einstich und das Schlitzloch insbesondere von gegenüberliegenden axialen Seiten des Nabenflansches aus aufeinander zu. Das ermöglicht einen guten Versatz und eine zuverlässige Speichensicherung.

Es ist möglich, dass die Länge eines Abschnitts des Schlitzlochs an der Oberseite des Nabenflansches größer ist als die Länge eines Abschnitts des Schlitzlochs an der axialen Seite und insbesondere an der axialen Innenseite des Nabenflansches. Das bietet einen besonders stabilen Nabenflansch. Möglich ist auch eine größere Länge an der axialen Innenseite als an der Oberseite. Das ermöglicht bei Nabenflanschen mit einem kleineren Durchmesser ein Einführen der Speiche von axial innen. Ein solcher Nabenflansch ist vorzugsweise für eine Vorderradnabe und dort insbesondere an dem Nabenflansch, der einer Aufnahmeeinrichtung für eine Bremsscheibe gegenüberliegt.

Die Breite des Schlitzlochs und/oder die Breite des Einstichs entsprechen vorzugsweise wenigstens der Breite eines Kopfes einer aufzunehmenden Speiche.

In allen Ausgestaltungen ist es besonders bevorzugt, dass die Aufnahmeabschnitte wenigstens teilweise in wenigstens einem Aufnahmeraum angeordnet sind. Insbesondere wird der Aufnahmeraum durch wenigstens eine Ausnehmung im Nabenflansch zur Verfügung gestellt. Solche Aufnahmeabschnitte bieten eine gute Zugänglichkeit der Aufnahmeabschnitte und ermöglichen zudem eine aerodynamisch günstige Unterbringung der Speichenköpfe.

Vorzugsweise ist der Aufnahmeraum axial offen und besonders bevorzugt axial nach außen offen ausgebildet. Möglich ist auch, dass der Aufnahmeraum axial innen offen ausgebildet ist.

Es ist möglich, dass der Aufnahmeraum durch wenigstens eine Abdeckung verschließbar ist. Insbesondere sind alle Aufnahmeräume eines Nabenflansches durch wenigstens eine gemeinsame Abdeckung verschließbar. Für die Aufnahmeräume eines Nabenflansches können auch zwei oder mehr Abdeckungen vorgesehen sein. Möglich ist auch, dass für jeden Aufnahmeraum wenigstens eine Abdeckung vorgesehen ist.

Beispielsweise kann eine ringförmige Abdeckscheibe vorgesehen sein, welche auf der axialen Außenseite des Nabenflansches angeordnet wird. Es kann vorgesehen sein, dass die Abdeckung lösbar und vorzugsweise werkzeuglos lösbar an dem Nabenflansch angeordnet ist. Möglich ist auch, dass die Abdeckung fest mit dem Nabenflansch verbunden ist. Beispielsweise kann eine stoffschlüssige Verbindung vorgesehen sein, zum Beispiel eine Klebeverbindung. Eine solche Abdeckung ermöglicht eine besonders aerodynamische Ausgestaltung des Nabenflansches.

Die Abdeckung kann auch fest oder lösbar an der Achse angeordnet sein. Beispielsweise kann die Abdeckung Teil eines Endanschlages sein, welcher drehfest oder drehbar an der Achse angeordnet ist und/oder auf die Achse aufgebracht, aufgesteckt oder eingesteckt oder eingebracht ist. Insbesondere ist die Abdeckung gegenüber dem Nabengehäuse drehbar gelagert. Vorzugsweise ist die Abdeckung drehfest an der Achse und/oder dem Endanschlag befestigt. Die Abdeckung und der Endanschlag können auch einteilig ausgebildet sein. Die Abdeckung kann auch an einem Rotor angeordnet sein oder Teil eines solchen sein. Die Abdeckung kann aber auch an dem Nabengehäuse befestigt sein.

Insbesondere ist der Aufnahmeraum durch wenigstens eine axiale Rückwand und durch wenigstens eine wenigstens teilweise umlaufende Seitenwand begrenzt. Eine umlaufende Seitenwand bildet eine Umfangswand. Die Rückwand wird insbesondere durch die axiale Außenwand des Nabenflansches ("Boden des Aufnahmeraums") zur Verfügung gestellt. Die Seitenwand verläuft insbesondere quer zur Rückwand. Insbesondere ist die Seitenwand derart umlaufend ausgestaltet, dass diese nur von der Speichendurchführung durchbrochen ist. Durch die Ausgestaltung mit einer Rückwand und einer quer dazu verlaufenden Seitenwand ergibt sich ein gut zugänglicher Aufnahmeraum. Zudem wird eine hohe Stabilität des Nabenflansches auch bei dynamischen Beanspruchungen gewährleistet.

Besonders bevorzugt stellt die Seitenwand wenigstens abschnittsweise einen radial verlaufenden Steg zur Verfügung. Ein derartiger Steg ermöglicht eine vorteilhafte Versteifung des Nabenflansches hinsichtlich der zu erwartenden Zugkräfte durch die Speichen. Besonders bevorzugt stellen die Seitenwände von benachbarten Aufnahmeräumen wenigstens einen radial verlaufenden Steg zur Verfügung.

Es ist möglich, dass auch die Vertiefungen zur Gewichtsreduzierung von wenigstens einer Seitenwand umgeben sind. Dabei stellen vorzugsweise die Seitenwand der Vertiefung und die Seitenwand eines benachbarten Aufnahmeraums wenigstens ein Steg zur Verfügung. Insbesondere sind im Nabenflansch eine Vielzahl von Aufnahmeräumen und/oder Vertiefungen vorgesehen, welche jeweils von Seitenwänden umgeben sind. Dabei bilden die Seitenwände wenigstens teilweise gemeinsam eine Vielzahl von Stegen im Nabenflansch. Möglich ist auch, dass die Seitenwand wenigstens abschnittsweise einen tangential verlaufenden Steg zur Verfügung stellt. Besonders bevorzugt weist der Nabenflansch an den axialen Seiten und/oder an der radialen Seite keine umlaufende Nut und/oder umlaufende Ausnehmung auf. Eine vollständig umlaufende Nut kann die Betriebsfestigkeit des Nabenflansches unzulässig schwächen.

In einer vorteilhaften Ausgestaltung ist es bevorzugt, dass wenigstens einige der Aufnahmeabschnitte einzeln in jeweils einem Aufnahmeraum angeordnet sind. In einer anderen Ausgestaltung ist vorzugsweise vorgesehen, dass wenigstens einige der Aufnahmeabschnitte paarweise in jeweils einem Aufnahmeraum angeordnet sind. In einer besonders bevorzugten Ausgestaltung kann die Nabe sowohl Aufnahmeräume mit nur einem Aufnahmeabschnitt als auch Aufnahmeräume mit paarweise angeordneten Aufnahmeabschnitten vorgesehen sein. Möglich sind auch Aufnahmeräume mit drei oder vier oder mehr Aufnahmeabschnitten. Die Festlegung der Anzahl der Aufnahmeabschnitte in den Aufnahmeräumen erfolgt vorzugsweise unter Berücksichtigung der zu erwartenden Krafteinwirkungen auf den Nabenflansch, zum Beispiel ob ein angetriebenes Laufrad vorliegt oder nicht.

Insbesondere ist eine Nabe vorgesehen, welche wenigstens einen Nabenflansch mit Aufnahmeräumen mit ausschließlich paarweise angeordneten Aufnahmeabschnitten umfasst. Insbesondere ist diese Ausgestaltung für einen Nabenflansch vorgesehen, welcher gegenüber einem anderen Nabenflansch der Nabe einen reduzierten Durchmesser aufweist. Insbesondere umfasst die Nabe wenigstens einen Nabenflansch mit Aufnahmeräumen, in denen die Aufnahmeabschnitte ausschließlich einzeln angeordnet sind. Vorzugsweise ist ein rotorseitiger und/oder bremsseitiger Nabenflansch derart ausgebildet.

Vorzugsweise umfassen die paarweise in einem Aufnahmeraum angeordneten Aufnahmeabschnitte unterschiedliche Typen von Aufnahmeabschnitten. Dadurch wird ein besonders ausgewogenes Verhältnis von Stabilität und Gewicht erreicht.

Besonders bevorzugt ist im Aufnahmeraum wenigstens eine Aufnahmetasche mit wenigstens einem Hinterschnitt angeordnet. Die Aufnahmetasche ist insbesondere dazu geeignet und ausgebildet, den Speichenkopf und vorzugsweise einen abgeflachten Speichenkopf verdrehsicher zu halten. Insbesondere ist jedem Aufnahmeabschnitt eine Aufnahmetasche zugeordnet. Die Aufnahmetasche ist vorzugsweise an den Querschnitt des Speichenkopfes angepasst. Insbesondere ist die Aufnahmetasche an einen parallel zur Längsachse der Speiche verlaufenden Querschnitt des Speichenkopfes angepasst. Es können auch Speichen mit einem abgerundeten und insbesondere nicht abgeflachten Speichenkopf vorgesehen sein.

Vorzugsweise umfasst der abgeflachte Speichenkopf zwei gebogene Schenkel. Insbesondere sind die Schenkel in wenigstens einer Achse konvex gebogen. Dabei weist die Aufnahmetasche zur Aufnahme der Schenkel entsprechend gekrümmte Bereiche auf. Durch eine solche Aufnahmetasche werden ein gleichmäßiges Anliegen der Speiche und somit ein guter Formschluss und eine gute Krafteinleitung erreicht.

Es ist möglich, dass die Aufnahmetasche dazu geeignet und ausgebildet ist, sich unter dem Einfluss einer aufgenommenen Speiche wenigstens teilweise umzuformen. Insbesondere tritt eine solche Umformung auf, wenn die Nabe in einem eingespeichten Zustand in einem Laufrad aufgenommen ist. Durch eine solche nachträgliche Umformung wird ein besonders enger Formschluss erreicht. Beispielsweise ist die Aufnahmetasche aus einer Aluminiumlegierung und die Speiche aus einer Stahllegierung gefertigt.

Die Aufnahmetasche weist vorzugsweise wenigstens zwei gegenüberliegende Anlegeabschnitte auf. An die Anlegeabschnitte ist insbesondere ein aufgenommener Speichenkopf mit jeweils einer Seitenkante verdrehsicher anlegbar. Durch die gegenüberliegenden Anlegeabschnitte wird ein Verdrehen in beide Drehrichtungen wirkungsvoll vermieden. Besonders bevorzugt ist wenigstens ein Anlegeabschnitt durch die Speichendurchführung unterbrochen. Der Anlegeabschnitt ist insbesondere so ausgestaltet, dass die aufgenommene Speiche mit einer abgeflachten Seite des Speichenkopfes verdrehsicher anlegbar ist.

Insbesondere ist der Nabenflansch dazu geeignet und ausgebildet, tangential ausgerichtete Speichen aufzunehmen. Dabei können sich die Speichen einmal oder auch mehrmals miteinander kreuzen. Möglich ist auch eine radiale Speichenführung.

Besonders bevorzugt umgibt der Nabenflansch die umfänglich geschlossene Speichendurchführung einstückig und insbesondere werkstoffeinstückig. Insbesondere ist die umfänglich geschlossene Speichendurchführung als eine Ausnehmung mit einem geschlossenen Umfang in den Nabenflansch eingearbeitet. Vorzugsweise umgibt eine einteilig ausgebildete Wandung des Nabenflansches die umfänglich geschlossene Speichendurchführung. Der Nabenflansch ist vorzugsweise einstückig ausgebildet. Der Nabenflansch ist besonders bevorzugt einstückig mit dem Nabengehäuse verbunden. Möglich ist es auch, die Nabenflansche separat auszubilden und drehfest mit dem Nabengehäuse zu verbinden.

Es ist bevorzugt, dass die Speichendurchführungen radial und/oder tangential im Nabenflansch verlaufen. Insbesondere verlaufen die Längsachsen der Speichendurchführungen in radialer und/oder tangentialer Richtung im Nabenflansch. Eine solche Nabe ermöglicht besonders haltbare und zugleich leichtgewichtige Laufräder.

Bei einer Nabe für ein Vorderrad verlaufen die Längsachsen insbesondere z. B. radial. Bei einer Nabe für ein Hinterrad bzw. für ein angetriebenes Laufrad verlaufen die Längsachsen beispielsweise tangential oder auch teilweise tangential und teilweise radial. Insbesondere verlaufen die Längsachsen der Speichendurchführungen nur in radialer und/oder tangentialer Richtung und nicht in axilaer Richtung im Nabenflansch. Dadurch kann die Nabe besonders gut mit ungekröpften Speichen eingesetzt werden, wodurch eine besonders hohe Stabilität erreicht wird.

Insbesondere umfasst die Nabe wenigstens eine Speiche. Die Speiche ist insbesondere gerade bzw. nicht gekröpft bzw. ungekröpft ausgeführt. Die Speiche kann auch gekröpft sein. Bevorzugt umfasst die Nabe wenigstens eine Speiche mit einem abgeflachten Speichenkopf. Es kann auch wenigstens eine Speiche mit einem nicht abgeflachten Speichenkopf umfasst sein, z. B. einem eckigen, mehreckigen, runden und/oder abgerundeten Speichenkopf. Die Speiche folgt vorzugsweise der Richtung ihrer Speichendurchführung. Die Speiche weist insbesondere einen einzelnen Speichenkörper bzw. Speichenschaft auf. Die Speiche ist insbesondere nicht an einen andere Speiche angebunden bzw. an dieser befestigt.

Vorzugsweise sind das Nabengehäuse und der wenigstens eine Nabenflansch einstückig ausgebildet. Insbesondere umfasst die Nabe zwei Nabenflansche, welche vorzugsweise beide einstückig mit dem Nabengehäuse verbunden sind.

Das erfindungsgemäße Laufrad umfasst die zuvor beschriebene erfindungsgemäße Nabe. Insbesondere umfasst das Laufrad eine Felge und eine Mehrzahl von Speichen.

Auch das erfindungsgemäße Laufrad hat viele Vorteile. Einen besonderen Vorteil bieten die unterschiedlichen Typen von Aufnahmeabschnitten, sodass das Laufrad insgesamt ein geringes Gewicht und zugleich eine hohe Stabilität aufweist.

In einer vorteilhaften Ausgestaltung umfasst das Laufrad eine Vielzahl von Speichen, welche an der Nabe aufgenommen sind. Dabei kreuzen sich insbesondere wenigstens eine in dem ersten Typ Aufnahmeabschnitt aufgenommene Speiche mit wenigstens einer in dem zweiten Typ Aufnahmeabschnitt aufgenommenen Speiche in wenigstens einem Kreuzungspunkt. Besonders bevorzugt sichert die im ersten Typ aufgenommene Speiche die im zweiten Typ aufgenommene Speiche an einem Verlassen ihres Aufnahmeabschnitts in axialer Richtung insbesondere formschlüssig.

Eine solche Anordnung der Speichen ermöglicht eine besonders unaufwendige und zugleich effiziente Sicherung gegen ein unbeabsichtigtes Ausspeichen. Dabei sind die im ersten Typ aufgenommenen Speichen insbesondere axial weiter außen als die im zweiten Typ aufgenommenen Speichen im Nabenflansch angeordnet. Das ist insbesondere dann vorteilhaft, wenn der zweite Typ Aufnahmeabschnitt als ein schlitzförmiger Einstich an der axialen Außenseite des Nabenflansches ausgebildet ist. So kann trotz der umfänglich offenen Speichendurchführung ein Austreten der Speiche verhindert werden, da diese durch die andere Speiche gehalten wird, welche selbst durch die geschlossene Speichendurchführung an einem Ausspeichen gehindert wird.

In einer anderen Ausgestaltung des Laufrads sind die Speichen als Messerspeichen mit wenigstens einem zylindrischen Schaftabschnitt und mit wenigstens einem abgeflachten Schaftabschnitt ausgebildet. Dabei sind im Kreuzungspunkt der Speichen vorzugsweise die zylindrischen Schaftabschnitte angeordnet. Dabei ist möglich, dass die Aufnahmeabschnitte derart ausgestaltet sind, dass sich die kreuzenden Speichen im Kreuzungspunkt berühren. Dadurch wird ein besonders haltbares und widerstandsfähiges Laufrad zur Verfügung gestellt.

Bevorzugt treten die Speichen in radialer und/oder tangentialer und vorzugsweise nicht in axialer Richtung aus dem Nabenflansch heraus. Insbesondere sind die Speichen gerade bzw. ungekröpft. Ein solches Laufrad ist besonders haltbar und belastbar. Insbesondere treten die Speichen an einer radialen Seite des Nabenflansches aus.

Die Achse kann als konventionelle Achse oder auch als Steckachse ausgebildet sein.

Weitere Vorteile und Merkmale der vorliegenden Erfindung ergeben sich aus der Beschreibung der Ausführungsbeispiele, welche mit Bezug auf die beiliegenden Figuren im Folgenden erläutert werden.

In den Figuren zeigen:
- Fig. 1: eine schematische Seitenansicht eines Fahrrads;
- Fig. 2: eine schematische Darstellung einer erfindungsgemäßen Nabe in einer perspektivischen Ansicht;
- Fig. 3: ein schematischer Ausschnitt der Nabe in einer perspektivischen Ansicht;
- Fig. 4: ein schematischer Ausschnitt der Nabe in einer Frontansicht;
- Fig. 5: ein schematischer Ausschnitt der Nabe in einer weiteren perspektivischen Ansicht;
- Fig. 6: ein schematischer Ausschnitt der Nabe in einer anderen perspektivischen Ansicht;
- Fig. 7: eine schematische Detailansicht eines Aufnahmeraums der erfindungsgemäßen Nabe in einer perspektivischen Darstellung; und
- Fig. 8: eine schematische Detailansicht des Aufnahmeraums mit einer eingelegten Speiche in einer geschnittenen, perspektivischen Darstellung.

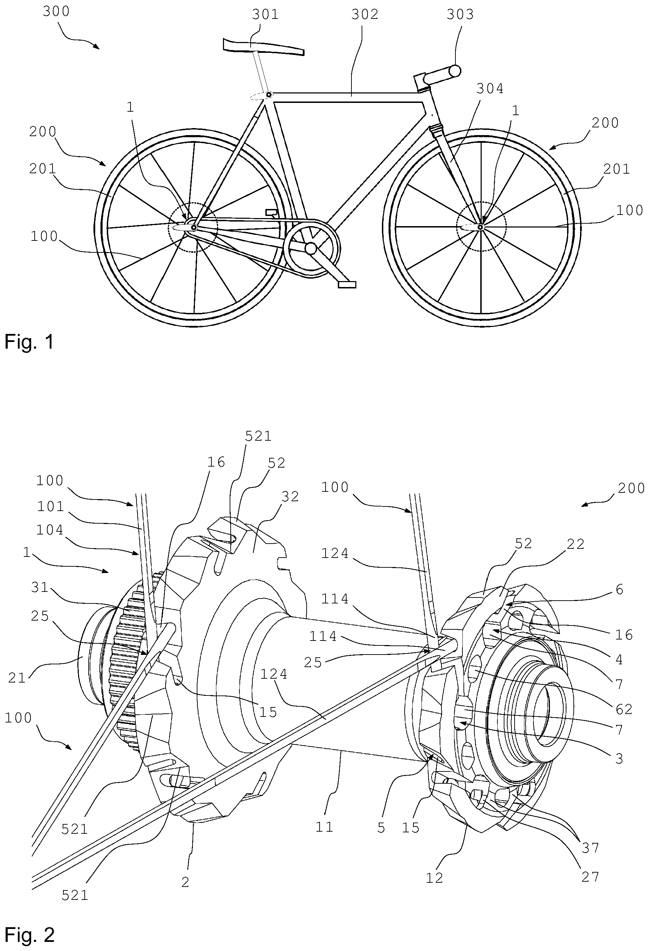

Die Figur 1 zeigt eine stark schematische Darstellung eines Fahrrads 300, welches hier als ein Rennrad bzw. Tourenrad ausgebildet ist. Das Fahrrad 300 kann auch als ein Mountainbike und/oder als ein teilweise muskelkraftbetriebenes Zweirad und beispielsweise als ein E-Bike ausgebildet sein. Das Fahrrad 300 weist zwei Laufräder 200 auf, welche hier mit einer erfindungsgemäßen Nabe 1 ausgestattet sind.

Weiterhin umfasst das Fahrrad 300 einen Sattel 301, einen Rahmen 302, einen Lenker 303 und eine Gabel 304 sowie weitere Fahrradkomponenten. Als Teil eines Antriebs umfasst das Fahrrad 300 hier eine Kettenschaltung. Für eine Kettenschaltung kann die Nabe 1 beispielsweise einen Rotor aufweisen, an dem einzelne Ritzel bzw. eine Kassette aufnehmbar sind. Weiterhin verfügt das Fahrrad 300 über eine Bremseinrichtung. Dazu kann an den Naben 1 der beiden Laufräder 200 jeweils eine Bremsenaufnahme 31 vorgesehen sein, um eine Bremsscheibe drehfest montieren zu können. Die als Vorderrad und Hinterrad ausgebildeten Laufräder 200 sind jeweils an Ausfallenden der Gabel 304 bzw. des Rahmens 302 befestigt.

Die Laufräder 200 weisen jeweils eine Felge 201 und eine Mehrzahl von Speichen 100 auf. Die Speichen 100 sind mit einem Ende an der Nabe 1 und mit einem anderen Ende an der Felge 201 befestigt. Die Speichen 100 sind hier als gerade bzw. nicht gekröpfte Speichen 100 ausgeführt. Bevorzugt sind Messerspeichen 104 vorgesehen. Die Speichen 100 umfassen jeweils einen Speichenkörper 101 mit einem abgeflachten Speichenkopf 102, welcher hier nicht sichtbar in der Nabe 1 aufgenommen ist.

In den Figuren 2-8 ist eine erfindungsgemäße Nabe 1 in verschiedenen Ansichten näher dargestellt. Die Nabe 1 kann Teil eines Laufrades 200 sein. Zur besseren Übersichtlichkeit sind nicht alle der vorgesehenen Speichen 100 dargestellt.

Die Nabe 1 umfasst zwei Nabenflansche 2, 12, welche an einem Nabengehäuse 11 aufgenommen sind. Das Nabengehäuse 11 ist gegenüber einer Achse 21 der Nabe 1 drehbar gelagert. An dem Nabengehäuse 11 ist eine Bremsenaufnahme 31 zur Befestigung von Bremsscheiben angebracht.

Der Nabenflansch 2, 12 weist eine Mehrzahl von Aufnahmeabschnitten 3, 4 zur Aufnahme jeweils eines Speichenkopfes 102 auf. Dabei ist der Nabenflansch 2, 12 hier für eine Aufnahme ungekröpfter bzw. gerader Speichen 100 ausgebildet. Die Speichen 100 verlassen die Aufnahmeabschnitte 3, 4 über eine Speichendurchführung 5, 6 in Richtung der Felge 201.

Die Speichendurchführungen 5, 6 weisen hier eine so ausgerichtete Längsachse auf, dass eine tangentiale Anordnung der Speichen 100 im Laufrad 200 vorliegt. Es kann aber auch eine radiale Einspeichung vorgesehen sein. Zudem ist die Anordnung der Aufnahmeabschnitte 3, 4 bzw. die Ausrichtung der Speichendurchführung 5, 6 hier so gewählt, dass eine Speiche 100 sich wenigstens einmal mit einer anderen Speiche 100 kreuzt.

Die Nabe 1 umfasst hier zwei Typen von Aufnahmeabschnitten 3, 4. Der erste Typ Aufnahmeabschnitt 3 weist eine umfänglich geschlossene Speichendurchführung 5 auf. Der zweite Typ Aufnahmeabschnitt 4 weist eine umfänglich geöffnete Speichendurchführung 6 auf. Dabei ist die umfänglich geschlossene Speichendurchführung 5 hier als ein Schlitzloch 15 ausgebildet. Die umfänglich offen ausgebildete Speichendurchführung 6 ist hier als ein schlitzförmiger Einstich 16 ausgebildet.

Die Aufnahmeabschnitte 3, 4 sind in mehreren Aufnahmeräumen 7 angeordnet. Dabei weist der eine Nabenflansch 2 hier Aufnahmeräume 7 auf, welche jeweils nur einen einzigen Aufnahmeabschnitt 3, 4 umfassen. Dabei sind die Aufnahmeräume 7 abwechselnd mit dem ersten oder dem zweiten Typ 3, 4 ausgestattet.

Der gegenüberliegende Nabenflansch 12 ist mit Aufnahmeräumen 7 ausgestattet, in denen jeweils zwei Aufnahmeabschnitte 3, 4 paarweise angeordnet sind. Dabei sind in jedem Aufnahmeraum 7 jeweils ein Aufnahmeabschnitt des ersten Typs 3 und des zweiten Typs 4 untergebracht. Somit ist jedem Aufnahmeraum 7 des Nabenflansches 12 jeweils ein Schlitzloch 15 und ein schlitzförmiger Einstich 16 zugeordnet. Die Längsachsen der Speichendurchführungen 5, 6 verlaufen dabei so, dass die in einem Aufnahmeraum 7 aufgenommenen Speichen 100 in entgegengesetzte Richtungen aus dem Nabenflansch 12 heraustreten und sich somit nicht kreuzen.

Die Aufnahmeräume 7 sind hier zu einer axial außen liegenden Seite 22 des Nabenflansches 2, 12 offen ausgebildet. Entsprechend sind auch die Aufnahmeabschnitte 3, 4 nur an der axialen Außenseite 22 des Nabenflansches 2, 12 angeordnet. Die Aufnahmeräume 7 sind hier jeweils durch eine axiale Rückwand 17 und durch eine quer zur Rückwand 17 verlaufende Seitenwand 27 begrenzt. Die Rückwand 17 wird hier durch die axiale Außenseite 22 des Nabenflansches 2, 12 zur Verfügung gestellt. Die Seitenwände 27 umgeben die jeweiligen Aufnahmeräume 7 und sind von den Speichendurchführungen 5, 6 der im Aufnahmeraum 7 angeordneten Aufnahmeabschnitte 3, 4 durchbrochen.

Die Seitenwände 27 der Aufnahmeräume 7 stellen hier Stege 37 zur Verfügung, welche im Wesentlichen radial und insbesondere radial verlaufen. Dabei stellen die Seitenwände 27 benachbarter Aufnahmeräume 7 gemeinsam jeweils einen Steg 37 zur Verfügung.

Zwischen den Aufnahmeräumen 7 sind hier Vertiefungen 62 zur Gewichtsreduktion in die axiale Außenseite 22 des Nabenflansches 2, 12 eingearbeitet. Die Vertiefungen 62 sind von einer umlaufenden Seitenwand 27 umgeben und bilden gemeinsam mit den Seitenwänden 27 der jeweils angrenzenden Aufnahmeräume 7 ebenfalls Stege 37.

Durch die Anordnung der Aufnahmeabschnitte 3, 4 in eine Mehrzahl von Aufnahmeräumen 7 ergibt sich ein sehr stabiler und belastbarer konstruktiver Aufbau des Nabenflansches 2, 12. Dadurch kann auf durchgehende und die Gesamtstabilität des Nabenflansches 2, 12 schwächende Aussparungen zur Aufnahme der Speichen 100 verzichtet werden. Durch die umgebenden Seitenwände 27 und die zwischen den Aufnahmeräumen 7 angeordneten Stege 37 können die auftretenden Zugkräfte gut aufgenommen und abgeleitet werden. Da die Vertiefungen 62 zur Gewichtsreduktion ebenfalls von Seitenwänden 27 umgeben sind bzw. von Stegen 37 begrenzt sind, tragen auch diese vorteilhaft zur Stabilität bei.

Die umfänglich geschlossenen Speichendurchführungen 5 erstrecken sich hier über einen Teil einer radialen Oberseite 52 des Nabenflansches 2, 12 sowie über einen Teil einer axial innen liegenden Seite 32.

Die als schlitzförmiger Einstiche 16 ausgebildeten Speichendurchführungen 6 erstrecken sich hier über einen Teil der Oberseite 52 sowie über einen Teil der axialen Außenseite 22 des Nabenflansches 2, 12.

Diese Anordnung der unterschiedlichen Typen von Aufnahmeabschnitten 3, 4 bietet eine Reihe von Vorteilen. Ein erheblicher Vorteil liegt darin, dass die aufgrund der Speichendurchführungen 5, 6 auftretende Schwächung im Nabenflansch 2, 12 auf gegenüberliegende Seiten 22, 32 verteilt werden können. Auf durchgehende bzw. einseitig großflächige Ausnehmungen, welche den Nabenflansch 2, 12 insgesamt schwächen, kann daher vorteilhaft verzichtet werden. Zudem kann die Anzahl der an einer Seite 22, 32 des Nabenflansches 2, 12 notwendigen Schlitze bzw. Ausnehmungen erheblich reduziert und auf 2 Seiten 22, 32 aufgeteilt werden.

Es können daher kompakte Nabenflansche 2, 12 mit geringen Durchmessern und/oder mit einer geringen Breite verwirklicht werden, ohne dass es zu Problemen beim Einspeichen oder gar zu Stabilitätsproblemen bezüglich des Nabenflansches 2, 12 kommt. Dadurch kann auch ein erhebliches Maß an Gewicht eingespart werden.

Die hier gezeigte abwechselnde Anordnung der unterschiedlichen Typen von Aufnahmeabschnitten 3, 4 über den Nabenflansch 2, 12 ist besonders vorteilhaft, da eine einseitige Anhäufung von Schlitzen vermieden wird.

Ein weiterer Vorteil unterschiedlicher Typen von Aufnahmeabschnitten 3, 4 liegt darin, dass die Nabe 1 besonders gut eingespeicht werden kann. Die umfänglich geöffnete Speichendurchführung 6 ermöglicht ein einfaches Einlegen der Speiche 100 quer zu ihrer Längsrichtung.

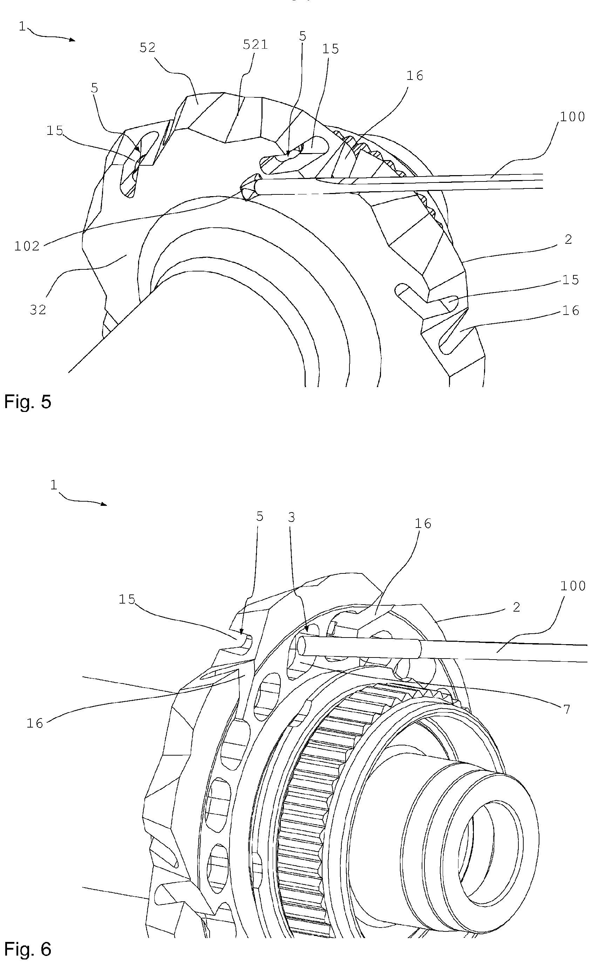

Die über die Oberseite 52 und die innere axiale Seite 32 verlaufenden Schlitzlöcher 15 ermöglichen ebenfalls eine besonders einfache Montage der Speichen 100. Die Speiche 100 kann, so wie in der Figur 5 gezeigt, von der axialen Innenseite 32 aus eingeführt werden. Dabei wird der Speichenkopf 102 durch die Speichendurchführung 5 in den Aufnahmeraum 7 eingeschoben. Das ist besonders bei Nabenflanschen 2, 12 mit einem entsprechend kleinen Durchmesser von Vorteil. Alternativ kann die Speiche 100 auch mit ihrem anderen Ende von der axialen Außenseite 22 aus in den Aufnahmeraum 7 und durch die Speichendurchführung 5 eingeschoben werden.

Die Länge des Schlitzlochs 15 an der Oberseite 52 im Verhältnis zu der Länge des Schlitzlochs an der axialen Innenseite 32 ist hier so gewählt, dass die Speiche 100 in einem für die Montage besonders günstigen Winkel von der gewünschten axialen Seite 22, 32 aus eingeführt werden kann.

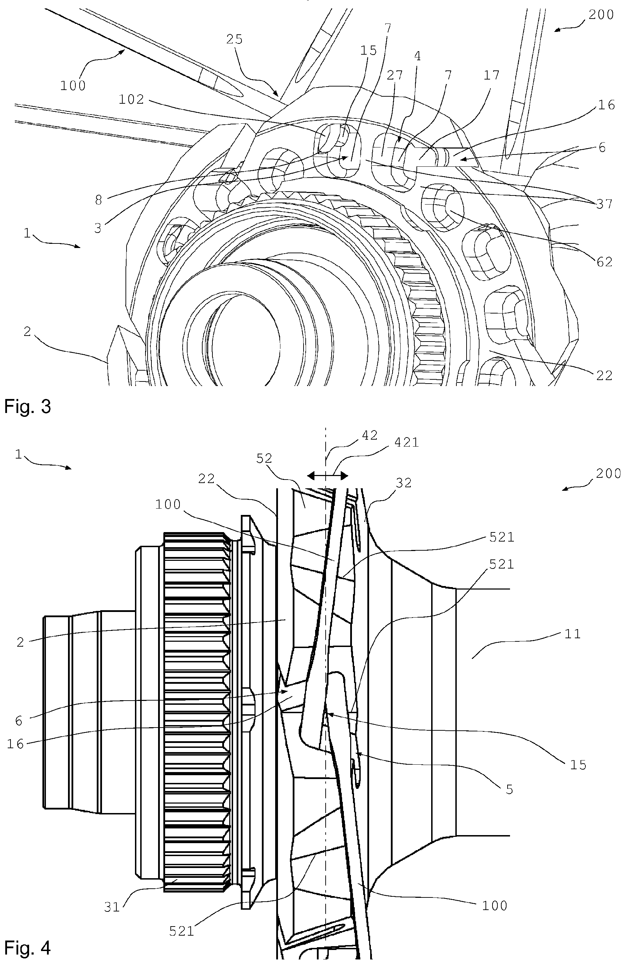

Besonders vorteilhaft ist eine Anordnung der unterschiedlichen Typen von Aufnahmeabschnitten 3, 4 mit einem Versatz 421 gegenüber einer Umfangslinie 42 des Nabenflansches 2, 12. Der Versatz 421 ist in der Fig. 3 besonders gut zu erkennen. Dadurch ist es möglich, dass die aufgenommenen Speichen 100 sich kreuzen. Zudem sind entsprechend ausgerichtete Längsachsen der Speichendurchführungen 5, 6 vorgesehen. Durch die kreuzende Speiche 100 wird die im Aufnahmeabschnitt 4 befindliche Speiche 100 an einem Herausrutschen gehindert. Die kreuzende Speiche selbst ist dabei in dem umfänglich geschlossenen Schlitzloch 15 aufgenommen, sodass diese ebenfalls nicht ausspeichen kann.

Diese gegenseitige Speichensicherung der sich kreuzenden Speichen 100 bietet sowohl im Fahrbetrieb als auch während des Einspeichens erhebliche Vorteile. Zum einen wird ein unerwünschtes Ausspeichen bei unbeabsichtigt gelösten Speichen 100 verhindert. Zum anderen kann beim Einspeichen besonders komfortabel mit den bereits eingelegten Speichen 100 hantiert werden, auch wenn diese noch nicht in der Felge befestigt sind.

Ein weiterer Vorteil des Versatzes 421 ist, dass die sich kreuzenden Speichen 100 sehr nah beieinander angeordnet werden können, sodass ein schmaler und somit leichter Nabenflansch 2, 12 möglich ist und dadurch auch die Belastbarkeit des Laufrades 200 verbessert wird.

An der Oberseite 52 des Nabenflansches 2, 12 sind hier Absenkungen 521 ausgebildet. Diese sind teilweise radial unterhalb eines Kreuzungspunktes 25 der sich kreuzenden Speichen 100 bzw. der sich kreuzenden Längsachsen der zugehörigen Speichendurchführungen 5, 6 angeordnet. Die Absenkungen 521 umfassen hier zwei aufeinander zulaufende Flanken, die sich im tiefsten Punkt der Absenkung 521 treffen. Dabei liegt der tiefste Punkt der Absenkung 521 in radialer Richtung direkt unterhalb des Kreuzungspunktes der Speichen 100.25. Dadurch ist ein besonders großer Winkel für die Kreuzung der Speichen 100 möglich, was sich vorteilhaft auf die Stabilität und Krafteinleitung in die Speichen 100 auswirkt. In der hier gezeigten Nabe 1 ist ein Kreuzungspunkt 25 möglich, welcher besonders nah oder sogar innerhalb des Umfangs des Nabenflansches 2, 12 liegt.

Die hier gezeigten Speichen 100 sind bevorzugt als Messerspeichen 104 ausgebildet. Die Messerspeichen 104 weisen einen zentralen abgeflachten Schaftabschnitt 124 auf, welcher von zwei zylindrischen Schaftabschnitten 114 umgeben ist. Durch die oben beschriebene Anordnung des Kreuzungspunktes 25 wird erreicht, dass der Kreuzungspunkt 25 im Bereich des zylindrischen Schaftabschnittes 114 der sich kreuzenden Speichen 100 liegt. Das wirkt sich vorteilhaft auf die Haltbarkeit des Laufrades 20 aus.

Abwechselnd zu den Absenkungen 521 unterhalb der Kreuzungspunkte 25 sind hier weitere Absenkungen 521 zur Gewichtsreduktion vorgesehen. Dabei sind die verschiedenen Typen der Absenkungen 521 abwechselnd über den Umfang des Nabenflansches 2, 12 angeordnet.

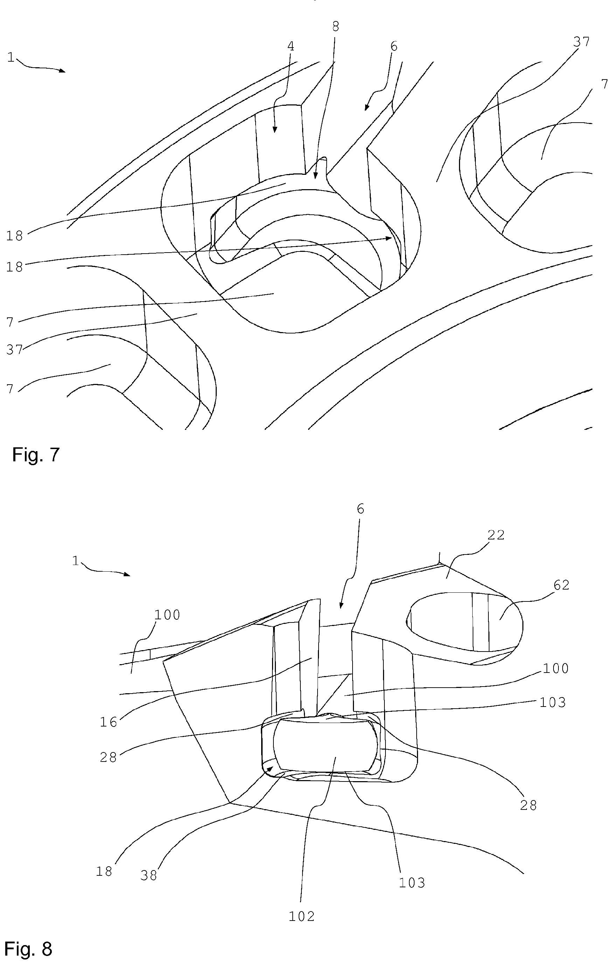

In den Aufnahmeräumen 7 ist hier wenigstens eine Aufnahmetasche 8 mit wenigstens einem Hinterschnitt 18 angeordnet. Dadurch wird eine verdrehsichere Aufnahme des Speichenkopfes 102 erreicht. In den Figuren 7 und 8 ist ein Aufnahmeraum 7 mit einer Aufnahmetasche 8 näher dargestellt.

Durch den Hinterschnitt 18 ist eine axiale Bewegung des darin aufgenommenen Speichenkopfes 102 nicht mehr möglich bzw. stark eingeschränkt. Zudem kann sich die Speiche 100 nicht mehr verdrehen. Das ist besonders vorteilhaft bei Messerspeichen 104, da diese bereits bei sehr geringen Verdrehungen um ihre Längsachse ihre aerodynamischen Vorteile einbüßen.

Der abgeflachte Speichenkopf 102 weist hier zwei gegenüberliegende Seitenkanten 103 auf. Liegt der Speichenkopf 102 im Hinterschnitt 18, liegen diese Seitenkanten 103 an gegenüberliegenden Anlegeabschnitten 28 verdrehsicher an. Die Anlegeabschnitte 28 werden hier durch die Rückwand 17 des Aufnahmeraums 7 sowie durch die der Rückwand 17 gegenüberliegende Wand des Hinterschnitts 18 bereitgestellt.

Der axial weiter außen liegende Anlegeabschnitt 28 ist hier durch die Speichendurchführung 6 in 2 separate Abschnitte unterbrochen. Zudem weist die Aufnahmetasche 8 hier eine Krümmung auf, welche an die Krümmung des Speichenkopfes 102 angepasst ist. Dadurch wird ein genauer Sitz des Speichenkopfes 102 in der Aufnahmetasche 8 gewährleistet, sodass eine besonders gleichmäßige Belastung des im Laufrad 200 eingespannten Speichenkopfes 102 gewährleistet werden kann.

Die Speichendurchführungen 5, 6 sowie die Aufnahmeräume 7 und die Vertiefungen 62 und die Absenkungen 521 sind hier vorzugsweise durch Ausfräsungen in den Nabenkörper eingearbeitet. Die Aufnahmetasche 8 ist vorzugsweise als eine Formfräsung in den Nabenflansch 2, 12 eingearbeitet.

**Bezugszeichenliste:**

| | | | |
|---|---|---|---|
| 1 | Nabe | 38 | Anlegeabschnitt |
| 2 | Nabenflansch | 42 | Umfangslinie |
| 3 | Aufnahmeabschnitt | 52 | Oberseite |
| 4 | Aufnahmeabschnitt | 62 | Vertiefung |
| 5 | Speichendurchführung | 100 | Speiche |
| 6 | Speichendurchführung | 101 | Speichenkörper |
| 7 | Aufnahmeraum | 102 | Speichenkopf |
| 8 | Aufnahmetasche | 103 | Seitenkante |
| 11 | Nabengehäuse | 104 | Messerspeiche |
| 12 | Nabenflansch | 114 | Schaftabschnitt |
| 15 | Schlitzloch | 124 | Schaftabschnitt |
| 16 | Einstich | 200 | Laufrad |
| 17 | Rückwand | 201 | Felge |
| 18 | Hinterschnitt | 300 | Fahrrad |
| 21 | Achse | 301 | Sattel |
| 22 | Seite | 302 | Rahmen |
| 25 | Kreuzungspunkt | 303 | Lenker |
| 27 | Seitenwand | 304 | Gabel |
| 28 | Anlegeabschnitt | 421 | Versatz |
| 31 | Bremsenaufnahme | 521 | Absenkung |
| 32 | Seite | | |
| 37 | Steg | | |

## Patentansprüche

1. Nabe (1) mit einem Nabengehäuse (11) zur drehbaren Anordnung gegenüber wenigstens einer im Nabengehäuse (11) aufnehmbaren Achse (21), wobei an dem Nabengehäuse (11) wenigstens ein umlaufender Nabenflansch (2, 12) vorgesehen ist, der zur Aufnahme und definierten Orientierung einer Mehrzahl an Speichen (100) dient, die jeweils einen Speichenkörper (101) und einen Speichenkopf (102) aufweisen und wobei der Nabenflansch (2, 12) eine Mehrzahl von Aufnahmeabschnitten (3, 4) zur Aufnahme jeweils eines Speichenkopfes (102) umfasst und wobei den Aufnahmeabschnitten (3, 4) jeweils eine Speichendurchführung (5, 6) zugeordnet ist, durch welche eine aufgenommene Speiche (100) aus dem Aufnahmeabschnitt (3, 4) herausführbar ist,
**dadurch gekennzeichnet,**
**dass** der Nabenflansch (2, 12) wenigstens zwei unterschiedliche Typen von Aufnahmeabschnitten (3, 4) umfasst und dass ein erster Typ eine umfänglich geschlossene Speichendurchführung (5) und ein zweiter Typ eine umfänglich geöffnete Speichendurchführung (6) aufweist.

2. Nabe (1) nach Anspruch 1, wobei die Aufnahmeabschnitte (3, 4) nur an einer axialen Seite (22, 32) des Nabenflansches (2, 12) und insbesondere an einer axialen Außenseite (22) des Nabenflansches (2, 12) angeordnet sind.

3. Nabe (1) nach einem der vorhergehenden Ansprüche, wobei die unterschiedlichen Typen von Aufnahmeabschnitten (3, 4) gegenüber einer Umfangslinie (42) des Nabenflansches (2, 12) mit wenigstens einem Versatz (421) angeordnet sind.

4. Nabe (1) nach dem vorhergehenden Anspruch, wobei der Versatz (421) dazu geeignet und ausgebildet ist, wenigstens eine im zweiten Typ Aufnahmeabschnitt (4) aufgenommene Speiche (100) durch wenigstens eine im ersten Typ Aufnahmeabschnitt (3) aufgenommene Speiche (100) an einem Verlassen der geöffneten Speichendurchführung (6) in axialer Richtung formschlüssig zu blockieren.

5. Nabe (1) nach einem der vorhergehenden Ansprüche, wobei die Speichendurchführungen (5, 6) von wenigstens jeweils zwei benachbart zueinander angeordneten Aufnahmeabschnitten (3, 4) sich kreuzende Längsachsen aufweisen, sodass darin aufgenommene Speichen (100) sich kreuzen können.

6. Nabe (1) nach einem der vorhergehenden Ansprüche, wobei der Nabenflansch (2, 12) an seiner Oberseite (52) wenigstens eine Absenkung (521) umfasst und wobei ein tiefster Punkt der Absenkung (521) radial unterhalb eines Kreuzungspunktes (25) der sich kreuzenden Längsachsen der Speichendurchführungen (5, 6) angeordnet ist.

7. Nabe (1) nach einem der vorhergehenden Ansprüche, wobei sich die Speichendurchführungen (5, 6) der unterschiedlichen Typen von Aufnahmeabschnitten (3, 4) jeweils über eine Oberseite (52) des Nabenflansches (2, 12) und jeweils nur über eine von zwei axialen Seiten (22, 32) des Nabenflansches (2, 12) erstrecken.

8. Nabe (1) nach einem der vorhergehenden Ansprüche, wobei die umfänglich geöffnete Speichendurchführung (6) als schlitzförmiger Einstich (16) ausgebildet ist und/oder wobei die umfänglich geschlossene Speichendurchführung (5) als Schlitzloch (15) ausgebildet ist.

9. Nabe (1) nach den beiden vorhergehenden Ansprüchen, wobei der schlitzförmige Einstich (16) sich wenigstens teilweise über die Oberseite (52) und diejenige axiale Seite (22, 32) des Nabenflansches (2, 12) erstreckt, an welcher auch der zugehörige Aufnahmeabschnitt (4) angeordnet ist und/oder wobei das Schlitzloch (15) sich wenigstens teilweise über die Oberseite (52) und diejenige axiale Seite (22, 32) des Nabenflansches (2, 12) erstreckt, welche der axialen Seite (22, 32) mit dem zugehörigen Aufnahmeabschnitt (3) gegenüberliegt.

10. Nabe (1) nach dem vorhergehenden Anspruch, wobei die Länge eines Abschnitts des Schlitzlochs (15) an der Oberseite (52) größer ist als die Länge eines Abschnitts des Schlitzlochs (15) an der axialen Seite (22, 32).

11. Nabe (1) nach einem der vorhergehenden Ansprüche, wobei die Aufnahmeabschnitte (3, 4) wenigstens teilweise in wenigstens einem Aufnahmeraum (7) angeordnet sind und wobei der Aufnahmeraum (7) insbesondere axial offen ausgebildet ist.

12. Nabe (1) nach dem vorhergehenden Anspruch, wobei wenigstens einige der Aufnahmeabschnitte (3, 4) einzeln in jeweils einem Aufnahmeraum (7) und/oder wobei wenigstens einige der Aufnahmeabschnitte (3, 4) paarweise in jeweils einem Aufnahmeraum (7) angeordnet sind und wobei die paarweise in einem Aufnahmeraum (7) angeordneten Aufnahmeabschnitte (3, 4) insbesondere unterschiedliche Typen umfassen.

13. Nabe (1) nach einem der beiden vorhergehenden Ansprüche, wobei im Aufnahmeraum (7) wenigstens eine Aufnahmetasche (8) mit wenigstens einem Hinterschnitt (18) angeordnet ist, welche dazu geeignet und ausgebildet ist, den Speichenkopf (102) verdrehsicher zu halten.

14. Nabe (1) nach dem vorhergehenden Anspruch, wobei die Aufnahmetasche (8) wenigstens zwei gegenüberliegende Anlegeabschnitte (28, 38) umfasst, an denen ein aufgenommener Speichenkopf (102) mit jeweils einer Seitenkante (103) verdrehsicher anlegbar ist.

15. Laufrad (200) mit einer Nabe (1) nach einem der vorhergehenden Ansprüche.

## Claims

1. Hub (1) comprising a hub shell (11) for rotatable arrangement relative to at least one axle (21) that can be received in the hub shell (11), wherein the hub shell (11) is provided with at least one circumferential hub flange (2, 12) that serves for accommodation and defined orientation of a plurality of spokes (100), each of which comprises a spoke body (101) and a spoke head (102), and wherein the hub flange (2, 12) comprises a plurality of accommodation sections (3, 4) for taking up one spoke head (102) each, and wherein one spoke feed-through (5, 6) is assigned to each of the accommodation sections (3, 4), through which an accommodated spoke (100) can be guided out of the accommodation section (3, 4),
**characterized in**
**that** the hub flange (2, 12) comprises at least two different types of accommodation sections (3, 4), and that a first type comprises a circumferentially closed spoke feed-through (5), and a second type comprises a circumferentially opened spoke feed-through (6).

2. The hub (1) according to claim 1 wherein the accommodation sections (3, 4) are only disposed on one axial side face (22, 32) of the hub flange (2, 12) and in particular on an axially outwardly surface (22) of the hub flange (2, 12).

3. The hub (1) according to any of the preceding claims, wherein the different types of accommodation sections (3, 4) are disposed at least at one offset (421) relative to a peripheral line (42) of the hub flange (2, 12).

4. The hub (1) according to the preceding claim, wherein the offset (421) is suitable and configured to form-fittingly block at least one spoke (100) accommodated in the second-type accommodation section (4) by way of at least one spoke (100) accommodated in the first-type accommodation section (3), against emerging from the opened spoke feed-through (6) in the axial direction.

5. The hub (1) according to any of the preceding claims, wherein the spoke feed-throughs (5, 6) of at least two accommodation sections (3, 4) disposed adjacent to one another comprise crossed longitudinal axes, so that spokes (100) accommodated therein can cross.

6. The hub (1) according to any of the preceding claims, wherein the hub flange (2, 12) comprises at least one sink (521) at its top face (52), and wherein a deepest point of the sink (521) is disposed radially beneath a crossing point (25) of the crossed longitudinal axes of the spoke feed-throughs (5, 6).

7. The hub (1) according to any of the preceding claims, wherein the spoke feed-throughs (5, 6) of the different types of accommodation sections (3, 4) each extend over a top face (52) of the hub flange (2, 12) and only over one of two axial side faces (22, 32) of the hub flange (2, 12).

8. The hub (1) according to any of the preceding claims, wherein the circumferentially opened spoke feed-through (6) is configured as a slot-shaped punched hole (16), and/or wherein the circumferentially closed spoke feed-through (5) is configured as a slotted hole (15).

9. The hub (1) according to the two preceding claims, wherein the slot-shaped punched hole (16) extends at least in part over the top face (52) and over that axial side face (22, 32) of the hub flange (2, 12) where the pertaining accommodation section (4) is also disposed, and/or wherein the slotted hole (15) extends at least partially over the top face (52) and that axial side face (22, 32) of the hub flange (2, 12) which lies opposite the axial side face (22, 32) with the pertaining accommodation section (3) .

10. The hub (1) according to the preceding claim, wherein the length of a section of the slotted hole (15) on the top face (52) is larger than the length of a section of the slotted hole (15) on the axial side face (22, 32).

11. The hub (1) according to any of the preceding claims, wherein the accommodation sections (3, 4) are at least partially disposed in at least one takeup space (7), and wherein the takeup space (7) is configured in particular axially open.

12. The hub (1) according to the preceding claim, wherein at least some of the accommodation sections (3, 4) are disposed singly in one takeup space (7) each, and/or wherein at least some of the accommodation sections (3, 4) are disposed in pairs in one takeup space (7) each, and wherein the accommodation sections (3, 4) disposed in pairs in one takeup space (7) comprise different types.

13. The hub (1) according to any of the two preceding claims, wherein in the takeup space (7) at least one receiving pocket (8) having at least one undercut (18) is disposed, which is suitable and configured to non-rotatably retain the spoke head (102) .

14. The hub (1) according to the preceding claim, wherein the receiving pocket (8) comprises at least two opposite placing sections (28, 38) where an accommodated spoke head (102) can be non-rotatably placed by one side edge (103) each.

15. Wheel (200) with a hub (1) according to any of the preceding claims.

## Revendications

1. Moyeu (1) comprenant un boîtier de moyeu (11) pour un agencement rotatif par rapport à au moins un axe (21) apte à être reçu à l'intérieur du boîtier de moyeu (11), dans lequel au moins une bride de moyeu (2, 12) circonférentielle est prévue au niveau du boîtier de moyeu (11), qui sert à recevoir et à orienter de manière définie une pluralité de rayons (100) qui présentent chacun un corps de rayon (101) et une tête de rayon (102), et dans lequel ladite bride de moyeu (2, 12) comprend une pluralité de sections de réception (3, 4) destinées à recevoir chacune une tête de rayon (102), et dans lequel un passage de rayon (5, 6) est associé respectivement aux sections de réception (3, 4), à travers lequel un rayon (100) reçu peut être mené hors de la section de réception (3, 4),
**caractérisé par le fait**
**que** la bride de moyeu (2, 12) comprend au moins deux types différents de sections de réception (3, 4) et qu'un premier type présente un passage de rayon (5) fermé circonférentiellement et un deuxième type présente un passage de rayon (6) ouvert circonférentiellement.

2. Moyeu (1) selon la revendication 1, dans lequel les sections de réception (3, 4) ne sont disposées que sur une face axiale (22, 32) de la bride de moyeu (2, 12) et en particulier sur une face extérieure axiale (22) de la bride de moyeu (2, 12).

3. Moyeu (1) selon l'une quelconque des revendications précédentes, dans lequel les types différents de sections de réception (3, 4) sont agencés avec au moins un déport (421) par rapport à une ligne circonférentielle (42) de la bride de moyeu (2, 12).

4. Moyeu (1) selon la revendication précédente, dans lequel le déport (421) est adapté et conçu pour bloquer à engagement positif au moins un rayon (100) reçu dans le deuxième type de section de réception (4) par au moins un rayon (100) reçu dans le premier type de section de réception (3), contre le fait de quitter le passage de rayon ouvert (6) dans la direction axiale.

5. Moyeu (1) selon l'une quelconque des revendications précédentes, dans lequel les passages de rayon (5, 6) d'au moins deux sections de réception (3, 4) respectivement voisines l'une de l'autre présentent des axes longitudinaux qui se croisent de sorte que des rayons (100) y reçus peuvent se croiser.

6. Moyeu (1) selon l'une quelconque des revendications précédentes, dans lequel la bride de moyeu (2, 12) comprend au moins une dépression (521) sur sa face supérieure (52), et dans lequel un point le plus profond de la dépression (521) est disposé radialement au-dessous d'un point d'intersection (25) des axes longitudinaux se croisant des passages de rayon (5, 6).

7. Moyeu (1) selon l'une quelconque des revendications précédentes, dans lequel les passages de rayon (5, 6) des types différents de sections de réception (3, 4) s'étendent chacun sur une face supérieure (52) de la bride de moyeu (2, 12) et ne s'étendent chacun que sur une seule de deux faces axiales (22, 32) de la bride de moyeu (2, 12).

8. Moyeu (1) selon l'une quelconque des revendications précédentes, dans lequel le passage de rayon (6) ouvert circonférentiellement est conçu en tant que piqûre (16) en forme de fente et/ou dans lequel le passage de rayon (5) fermé circonférentiellement est conçu en tant que trou en fente (15).

9. Moyeu (1) selon les deux revendications précédentes, dans lequel ladite piqûre (16) en forme de fente s'étend au moins en partie sur la face supérieure (52) et sur la face axiale (22, 32) de la bride de moyeu (2, 12), sur laquelle est disposée également la section de réception (4) associée
et/ou dans lequel le trou en fente (15) s'étend au moins en partie sur la face supérieure (52) et la face axiale (22, 32) de la bride de moyeu (2, 12), qui est située en regard de la face axiale (22, 32) avec la section de réception (3) associée.

10. Moyeu (1) selon la revendication précédente, dans lequel la longueur d'une section du trou en fente (15) sur la face supérieure (52) est supérieure à la longueur d'une section du trou en fente (15) sur la face axiale (22, 32).

11. Moyeu (1) selon l'une quelconque des revendications précédentes, dans lequel les sections de réception (3, 4) sont disposées au moins en partie dans au moins un espace de réception (7) et dans lequel ledit espace de réception (7) est conçu en particulier de manière à être axialement ouvert.

12. Moyeu (1) selon la revendication précédente, dans lequel au moins certaines des sections de réception (3, 4) sont disposées individuellement dans respectivement un espace de réception (7) et/ou dans lequel au moins certaines des sections de réception (3, 4) sont disposées par paires dans respectivement un espace de réception (7) et dans lequel les sections de réception (3, 4) disposées par paires dans un espace de réception (7) comprennent en particulier des types différents.

13. Moyeu (1) selon l'une quelconque des deux revendications précédentes, dans lequel au moins une poche de réception (8) comprenant au moins une contre-dépouille (18) est agencée dans l'espace de réception (7), laquelle poche de réception est adaptée et conçue pour maintenir la tête de rayon (102) de manière à être bloquée en rotation.

14. Moyeu (1) selon la revendication précédente, dans lequel ladite poche de réception (8) comprend au moins deux sections d'appui (28, 38) opposées contre lesquelles une tête de rayon (102) reçue peut être appliquée par respectivement un bord latéral (103) de manière à être bloquée en rotation.

15. Roue (200) comprenant un moyeu (1) selon l'une quelconque des revendications précédentes.
